# EUROPEAN PATENT SPECIFICATION

(11) **EP 2 214 880 B1**
(45) Date of publication and mention of the grant of the patent: **01.02.2012**
(21) Application number: 07826837.2
(22) Date of filing: 23.10.2007
(51) Int. Cl.: B29C 33/10, B29D 30/06

(54) **Apparatus and process for vulcanization and moulding of tyres**
Vorrichtung und Verfahren zum Vulkanisieren und Formen von Reifen
Appareil et procédé de vulcanisation et moulage de pneumatiques

(43) Date of publication of application: 11.08.2010
(73) Proprietor: Pirelli Tyre S.P.A., 20126 Milan (IT)
(72) Inventor: SECCHI, Mario, I-20126 Milano (IT)
(74) Representative: Brasca, Marco
(86) International application number: PCT/IB2007/054307
(87) International publication number: WO 2009/053776

(56) References cited:
- EP-A- 0 396 060
- WO-A-00/23238
- AT-B- 387 539
- DE-A1- 10 044 075
- KR-A- 20030 029 739
- KR-A- 20030 069 699
- KR-A- 20040 048 214
- US-A- 4 447 197
- US-A- 5 283 022
- US-B1- 6 206 336

## Description

The present invention relates to an apparatus and process for vulcanisation and moulding of tyres for vehicle wheels.

A tyre for vehicle wheels generally comprises a carcass structure including at least one carcass ply having respectively opposite end flaps in engagement with respective annular anchoring structures integrated into the regions usually identified as "beads", which have an inner diameter substantially corresponding to a socalled "fitting diameter" of the tyre on a respective rim.

Associated with the carcass structure is a belt structure comprising one or more belt layers, disposed in radially superposed relationship with respect to each other and to the carcass ply, having textile or metallic reinforcing cords with crossed orientation and/or substantially parallel to the circumferential extension direction of the tyre. A tread band, also made of elastomeric material like other semifinished products constituting the tyre, is applied in a radially external position to the belt structure.

Respective sidewalls of elastomeric material are also applied at an axially external position to the side surfaces of the carcass structure, each extending from one of the side edges of the tread band until close to the respective annular anchoring structure to the beads, which sidewalls too can be previously produced in the form extruded section bars.

Subsequently to building of the green tyre carried out through assembly of respective components, a vulcanisation and moulding treatment is carried out which aims at determining the structural stabilisation of the tyre by cross-linking of the elastomeric components and also at impressing the tread band with a desired tread pattern.

The vulcanisation and moulding treatment is carried out by introducing the green tyre into a moulding cavity of a vulcanisation and moulding apparatus, which cavity has a shape corresponding to the outer conformation to the given to the vulcanised tyre.

The green tyre, once enclosed in the apparatus, is pressed against the containment walls. Subsequently, or simultaneously with the pressing step, heat is supplied to the tyre pressed against the containment walls.

By effect of pressing, suitable ridges provided on the mould sectors or the plates cause formation of a desired tread pattern on the tyre tread band, and also of a plurality of graphic signs on the tyre sidewalls. The supplied heat causes cross-linking of the elastomeric material of which the tyre itself is made. When the cycle has been completed, the vulcanised and moulded tyre is drawn out of the apparatus, after opening of same.

In order to prevent air pockets or pockets of other fluids from being entrapped, during pressing, between the blend and the containment walls of the apparatus, passages for gas venting are made through the apparatus walls and they communicate with an environment external to the moulding cavity.

Before the elastomeric material starts solidifying during vulcanisation, due to its own viscosity and the pressure to which it is submitted, it enters the vent passages and runs therethrough.

Flowing of the elastomeric material in the vent passages gives rise to two drawbacks. First of all, if the materials inside the passages remain attached to the vulcanised tyre, when the tyre is taken away from the apparatus it has excrescences (called peduncles, whiskers, "vermicelli") that must be removed (by a deburring or trimming action) before selling the casing. This removal is often carried out by hand and is time-consuming. Even where it is made automatically however, removal of the excrescences adversely affects the casing cost, because it is necessary to submit the casing itself to a further working step and use an apparatus dedicated thereto. Secondly, if the elastomeric material remains, on the contrary, entrapped in the vent passages of the apparatus, when the tyre is removed, it obstructs said passages and prevents escape of air to the outside during vulcanisation of a subsequent tyre.

In the past different attempts have been made to partly solve this problem.

Document WO 00/23238 in the name of the same Applicant shows a removable insert for venting of a mould, which comprises an annular bush with a central hole and an insert provided with a central hole and fitted in the annular bush. The annular bush is in turn inserted into a channel formed through the mould.

Patent US3377662 discloses a metal mould for shaping articles of plastic material and vulcanising rubber articles. The mould has a plurality of vent holes formed through the mould and a plurality of inserts, each fitted close to the inner end of each of the holes. The insert comprises an outer jacket and an inner element or core provided with thin grooves disposed in the outer surface of the inner element and parallel to the longitudinal axis of same. The inner element is adapted to be firmly but removably introduced into the jacket so as to define a plurality of passages between the grooves and the inner surface of said jacket.

Patent US4795331 discloses an insert for mould venting comprising a head, a neck and a collar, which insert is fitted into a hole formed in the mould wall. The head delimits an annular passage, together with the hole. The collar is in engagement against the wall defining the hole to clamp the insert into the hole itself. Passages are provided to let the fluid flow out of the moulding cavity until past the collar.

Patent US6561779 shows a mould for vulcanisation of rubber articles, particularly tyres for vehicles. The mould has vent holes inside which locking mechanisms are housed to stop penetration of the raw material. Each locking mechanism comprises a central body fixed into the respective hole and a sealing portion consisting of a steel spring hooked to the central body. The sealing portion forms at least one air passage with the central body.

Document KR20040048214A discloses a venting apparatus installed in a tire vulcanizing mold. In the .venting apparatus, an inner diameter of a center through hole formed in the casing is gradually increased in an upper direction and is gradually decreased in a lower direction for thereby forming a tapered shape. The angles of the slant surfaces of the valve head point-contacting with an upper corner portion of the center through hole are different, so that a discharging capability of air is enhanced, and it is possible to prevent a formation of a vent rubber in a finished tire which vent rubber is formed when a rubber flows into a venting apparatus.

Document AT187784A discloses a vulcanizing mould having a number of venting bores which pass through the mould wall and in which inserts having sintered metal pins are arranged flush with the inside wall of the mould. The inserts consist of metal sleeves, which receive the sintered metal pins and the end region of which that is assigned to the inside wall of the mould bears a base, which is passed through by a bore.

Futher venting devices for tire vulcanizing molds are disclosed in KR 2004 36675Y.

According to the Applicant's opinion, even though the solutions proposed by the above mentioned known art are adopted, it is practically impossible to fully eliminate the excrescences generated by the vent passages during the vulcanisation process.

The Applicant has therefore examined the problem of reducing the sizes of these excrescences to a great extent.

In accordance with the present invention, the Applicant has found that by adopting bushes, to be fitted into the vent holes of the vulcanisation and moulding apparatus, provided with channels with a converging section tapering away from the moulding cavity, it is possible to prevent or at least limit penetration of the elastomeric material into the channels. In fact, the mutually inclined walls of each channel counteract flowing of the elastomeric material into the channel itself and slow down advancing of same.

More specifically, according to a first aspect the present invention relates to an apparatus for vulcanisation and moulding of tyres comprising: containment walls defining an inner surface of a moulding cavity, the shape of said inner surface matching the final conformation to be given to the vulcanised tyre, and a plurality of devices for venting said moulding cavity, wherein at least one of said venting devices comprises an insert firmly fitted in a through hole in one of the containment walls and having a vent channel comprising a first end opening into the moulding cavity and a second end in fluid communication with an environment external to the moulding cavity; wherein the vent channel has a tapered segment between the first and second ends; said tapered segment having a section reduction in the direction of the second end and counteracting flowing of the elastomeric material into said channel, wherein no devices are placed inside the vent channel.

According to a further aspect, the present invention relates to a process for vulcanisation and moulding of tyres, comprising the steps of:
- providing an apparatus for vulcanisation and moulding of tyres comprising containment walls defining an inner surface of a moulding cavity, the shape of said inner surface matching the final shape to be given to the vulcanised tyre;
- introducing a green tyre to be vulcanised into the moulding cavity;
- closing the moulding cavity, and
- pressing the green tyre against the containment walls, and
- supplying heat to the green tyre;
wherein the step of providing an apparatus comprises:
- making through holes into the containment walls;
- providing inserts; that has no devices inside
- forming a vent channel that has no devices inside in each insert, which channel has a tapered segment between a first end and a second end; said tapered segment having a section reduction in the direction of the second end;
- inserting and clamping the inserts into the respective through holes so that the first end of the vent channel opens into the moulding cavity and the second end is in fluid communication with an environment external to the moulding cavity.

Adoption of the inserts according to the invention allows tyres with excrescences or peduncles of very reduced sizes to be obtained.

In addition, due to the claimed features the structure of the inserts of known type located in the vent holes of the vulcanisation and moulding apparatus can be simplified so as to reduce the production costs of the moulds and to make the latter more reliable.

In particular, through adoption of inserts to be fitted in the apparatus, formation of very small holes directly in the apparatus walls can be avoided and therefore construction of the apparatus itself can be simplified.

The present invention, in at least one of the above mentioned aspects, can further have one or more of preferred features that will be hereinafter described.

Preferably, the tapered segment has mutually converging smooth walls.

According to an embodiment, the vent channel further has a lead-in or inlet segment of constant section close to the first end, the tapered segment extending from said inlet segment towards the second end.

Adoption of the segment of constant section enables part of the insert to be eliminated, through shortening, so as to adapt it, as detailed below, to the shape of the apparatus without altering the functional character of the tapered segment.

Preferably, the vent channel has a flared outlet segment located close to the second end, the tapered segment extending from said outlet segment towards the first end.

Flaring of the channel outlet allows air venting to be facilitated during moulding. In addition, due to this flaring, during the step of mounting the insert to the containment wall, possible material removed from the apparatus by effect of the insert rubbing against the wall of the apparatus itself is prevented from being introduced into the second end of the channel causing jamming and obstruction of the latter.

In accordance with a preferred embodiment, the vent channel has polygonal cross sections.

Preferably, each of the polygonal cross sections has sharp corners.

The elastomeric material is not able to deform to such an extent as to reach the apex of said sharp corners and fully occupy the section. Therefore at said corners, clearances in any case remain for passage of the gases which tend to carry along the elastomeric material with less efficiency than it happens in channels of circular section of the known art. In addition, the channel is never fully obstructed.

According to an embodiment, the vent channel extends within the insert.

Alternatively, the vent channel is defined by a furrow extending in a side wall of the insert. Creation of a furrow in the side wall is simple, quick and cheap.

In addition, preferably, the insert is divided into two parts along a substantially longitudinal plane of the insert itself.

According to an embodiment, a distal portion of the insert carrying the second end of the vent channel is bevelled, to facilitate mounting in the through hole of the apparatus.

In addition, according to an embodiment, a side surface of the insert has a rough region adapted to interfere with the through hole to steadily clamp said insert in said through hole.

Preferably, the rough region is close to a proximal portion of the insert carrying the first end of the vent channel. In this manner, clamping takes place after almost the whole insert has been fitted into the respective hole of the apparatus.

Preferably, the insert has a length greater than about 8 mm.

In addition, preferably, the insert has a length less than about 12 mm.

Preferably, the insert has a diameter greater than about 0.8 mm.

In addition, preferably, the insert has a diameter smaller than about 3 mm.

The insert diameter is substantially coincident with the diameter of the holes formed in the apparatus. Therefore, for creation of said holes it is possible to use drills of such a diameter and length that all the apparatus points can be reached without any risk that said drills would jam, bend and break.

Preferably, the tapered segment of the vent channel has a length greater than 4.mm.

In addition, preferably, the tapered segment of the vent channel has a length smaller than 8 mm.

Preferably, the inlet segment of the vent channel has a length greater than 0.8 mm.

In addition, preferably, the inlet segment of the vent channel has a length smaller than 1.5 mm.

Preferably, the outlet segment of the vent channel has a length greater than 3 mm.

In addition, preferably, the outlet segment of the vent channel has a length smaller than 4 mm.

Preferably, the tapered segment of the vent channel has a tapering angle greater than about 2°.

In addition, preferably, the tapered segment of the vent channel has a tapering angle smaller than about 4°.

Preferably, the outlet segment of the vent channel has a flaring angle greater than about 15°.

In addition, preferably, the outlet segment of the vent channel has a flaring angle smaller than about 30°.

Preferably, the vent channel has an inlet section greater than about 0.05 mm².

In addition, preferably, the vent channel has an inlet section smaller than about 1.5 mm².

Preferably, the vent channel has a minimum section greater than about 0.002 mm².

In addition, preferably, the vent channel has a minimum section smaller than about 0,01 mm².

In accordance with an embodiment, the step of making the vent channel comprises: dividing the insert into two parts along a substantially longitudinal plane of said insert; forming the channel by producing a furrow in a coupling surface of at least one of the two parts; moving the two parts close to each other at said coupling surface.

Alternatively, the step of making the vent channel comprises: forming the vent channel by producing a furrow in a side surface of the insert.

Preferably, the vent channel is formed by milling.

In both embodiments, the procedure used is quick and cheap and allows time to be saved and production costs of the whole apparatus to be reduced, taking into account the fact that this procedure must be repeated for the number of inserts present in the apparatus.

The choice between making the vent channel in the insert or in the side wall depends on the apparatus shape close to the point where gas venting is required to be provided. In fact, the first end of the channel must open into a respective region of the moulding cavity where said gases tend to accumulate.

According to a manufacturing procedure, the process further comprises the step of creating at least one rough region, which is adapted to interfere with the through hole, in the side surface of the insert, so as to firmly clamp said insert in said through hole.

Preferably the rough region is obtained by knurling.

Preferably, in addition, the process, after fitting the insert into the respective through hole, comprises the step of removing a portion of said insert projecting from the inner surface of the moulding cavity so as to make it flush with said inner surface.

This operation enables any imperfection in the mounting region of the inserts to be eliminated, thereby avoiding these imperfections being matingly repeated on the vulcanised tyre.

The insert portion that is removed preferably contains the inlet segment of constant section, so that removal does not impair the functional character of the tapered segment.

Preferably, the insert is made of aluminium and/or steel and/or plastic material.

Irrespective of the specific material used, this material at all events must be able to withstand the vulcanisation temperature included between about 170°C and about 250°C.

Further features and advantages will become more apparent from the detailed description of a preferred but not exclusive embodiment of an apparatus and a process for vulcanisation and moulding of tyres, in accordance with the present invention.

This description will be set out hereinafter with reference to the accompanying drawings, given by way of non-limiting example, in which:
- Fig. 1 diagrammatically shows a portion in diametrical section of an apparatus for vulcanisation and moulding of tyres according to the present invention;
- Fig. 2 is a diametrical section of a shell portion of the apparatus seen in Fig. 1 at a venting device;
- Fig. 2a shows the portion seen in Fig. 2 in a process step for manufacture of the apparatus;
- Fig. 3 is an exploded perspective view of an insert being part of the venting device referred to in Fig. 2;
- Fig. 3a shows the insert seen in Fig. 3 in partial longitudinal section;
- Fig. 3b is a front view of the insert seen in Fig. 3;
- Fig. 4 is a perspective view of an alternative embodiment of the insert shown in Fig. 3;
- Fig. 4a shows the insert seen in Fig. 4 in partial longitudinal section;
- Fig. 4b is a front view of the insert seen in Fig. 4.

With reference to the drawings, an apparatus for vulcanisation and moulding of tyres for vehicle wheels in accordance with the present invention has been generally identified with 1.

The vulcanisation and moulding apparatus is part of a plant for manufacturing types for vehicle wheels which generally comprises devices adapted to form a green tyre 2 and devices capable of transferring the green tyre 2 into a moulding cavity 3 of apparatus 1. The moulding cavity 3 has a shape corresponding to the outer conformation to be given to the vulcanised tyre 2. Said devices for forming and transferring tyre 2 are not shown and are not further described as they can be made in any convenient manner.

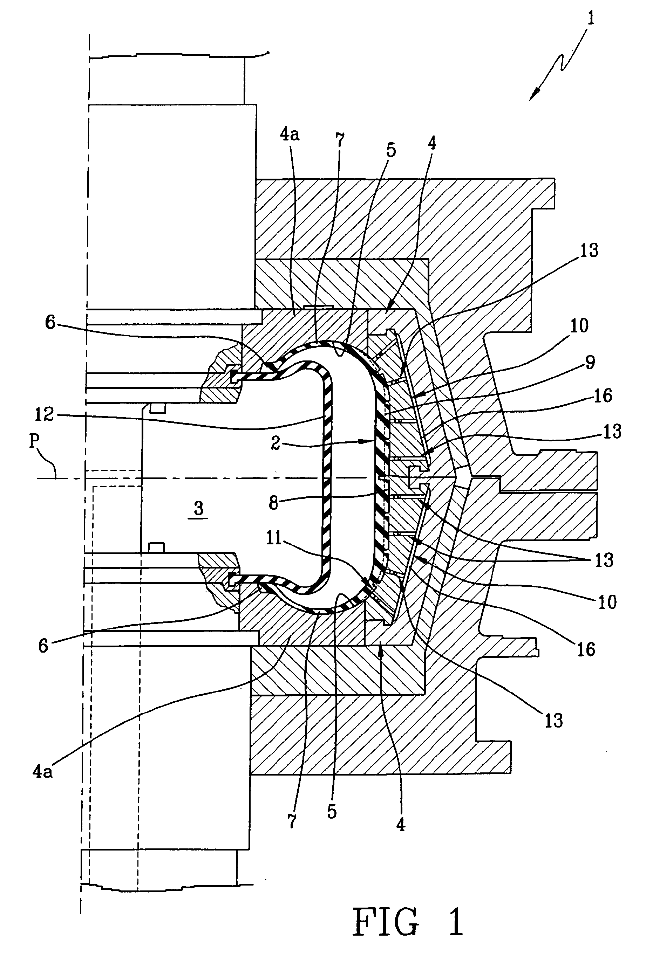

As shown in Fig. 1, apparatus 1 has a pair of axially opposite shells 4 that can be mutually coupled at an equatorial plane "P". Shells 4 each comprise a work surface 5 designed to operate on the beads 6 and sidewalls 7 of a green tyre 2 to be vulcanised.

Shells 4 disposed close to each other in said equatorial plane "P" further define a circumferential surface 8 designed to operate against a tread band 9 of the tyre 2 to be vulcanised.

In the non-limiting embodiment shown, apparatus 1 is of the type made up of sectors.

Each of the two shells 4 comprises a plate 4a carrying the work surface 5 and a plurality of circumferential sectors 10 that can be separated by plate 4a and carry half of the circumferential portion 8. The circumferential sectors 10, when the apparatus is closed, together with plates 4a define containment walls of the moulding cavity 3.

According to an alternative embodiment not shown, apparatus 1 is of the type made up of two halves, i.e. each of the shells 4 consists of a single body and defines one half of apparatus 1. An inner surface of each of the two shells 4 comprises the work surface 5 designed to operate on the beads 6 and sidewalls 7 of the green tyre 2 to be vulcanised and half of the circumferential portion 8 operating on the tread band 9 or crown of tyre 2.

Irrespective of whether apparatus 1 is made up of sectors or of two halves, the containment walls 4a, 10 delimit an inner surface 11 of the moulding cavity 3 the shape of which matches the final conformation to be given to tyre 2.

The green tyre 2, once enclosed in apparatus 1, is pressed against the containment walls 4a, 10 by means of a suitable device 12, defined by a bladder for example. Subsequently or simultaneously with the pressing step, heat is supplied to tyre 2 pressed against the containment walls 4a, 10.

By effect of pressing, suitable ridges provided on shells 4 cause formation of a desired tread pattern on the tread band 9 of tyre 2, and possibly of a plurality of graphic signs on the sidewalls 7 of the tyre 2 itself. The supplied heat causes cross-linking of the elastomeric material of which tyre 2 is made. When the cycle has been completed, the vulcanised and moulded tyre 2 is extracted from apparatus 1 after opening of the latter.

The vulcanisation and moulding apparatus 1 further comprises a plurality of vent holes 13 that, concurrently with the pressing step, perform the function of evacuating air pockets or pockets of other fluid possibly used in the vulcanisation process that may be present between the green tyre 2 and inner surface 11.

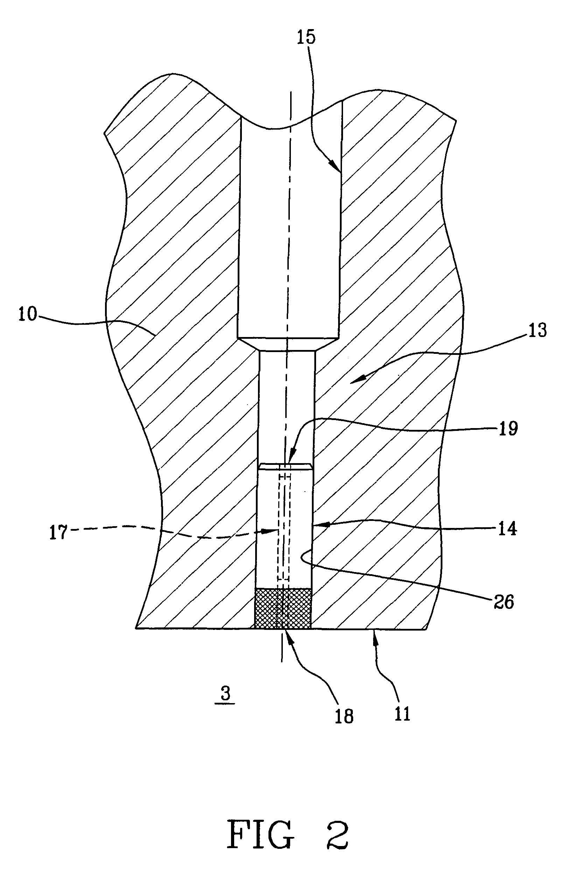

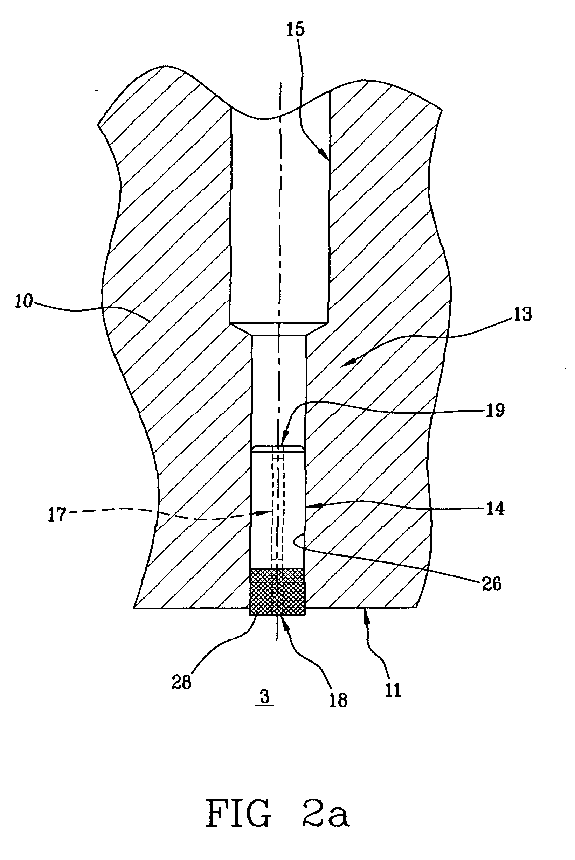

As better shown in Fig. 2, each of the venting devices 13 comprises an insert 14 firmly fitted in a through hole 15 in one of the containment walls 4a, 10.

Insert 14 can be made of aluminium (aluminium 115, for example) and/or steel (steel 304, for example) and/or plastic material. In any case, irrespective of the specific material used, this material must be able to withstand the vulcanisation temperature of about 200°C.

Preferably, insert 14 has a length "L" included between about 8 mm and about 12 mm and a diameter "d" included between about 0.8 mm and about 3 mm.

Each through hole 15 is in fluid communication, through passages 16 shown in Fig. 1, with an environment external to the moulding cavity 3, into which air and fluids can be safely evacuated.

Each insert 14 is mounted to one end of the respective through hole 15 close to the moulding cavity 3 (Fig. 2), as detailed in the following.

Referring to Figs. 2, 3, 3a, 3b, 4, 4a, 4b, formed in insert 14 is a vent hole 17 which substantially extends along the longitudinal extension of the insert 14 itself.

In more detail, insert 14 is defined by a bush 14 and has a cylindrical shape preferably of circular section, with a first end face 14a, a second end face 14b and a side wall 14c.

The vent channel 17 has a first end 18 opening onto the first face 14a of bush 14 and a second end 19 opening onto the second face 14b of bush 14.

Once bush 14 is mounted in the respective hole 15, the first end 18 opens into the moulding cavity 3 and the second end 19 is in fluid communication, through hole 15 and passages 16, with the external environment (Fig. 2).

The vent channel 17 further has a segment 20 tapering between the first end 18 and second end 19, where tapering takes place in the direction of the second end 19, i.e. it has successive sections the area of which decreases in the direction of the second end.

According to an embodiment, the tapered segment 20 is defined by walls that are preferably smooth, mutually inclined and converge towards said second end 19.

The tapered segment 20 of the vent channel 17 has a length "L1" included between about 4 mm and about 8 mm.

In addition, preferably, the tapered segment 20 has a tapering angle "α" included between about 2° and about 4°.

In the two embodiments shown, the tapered segment 20 is a central segment of channel 17, which channel 17 further has an inlet segment 21 of constant section close to the first end 18 and an outlet segment 22 located close to the second end 19. The outlet segment 22 is flared, i.e. it diverges and opens towards said second end 19.

Preferably, the inlet segment 21 has a length "L2" included between about 0.8 mm and about 1.5 mm.

In addition, the inlet section, in the presence or absence of the segment of constant section, is preferably included between about 0.05 mm² and 1.5 mm².

Preferably, the outlet segment 22 has a length "L3" included between about 3 mm and about 4 mm.

In addition, the outlet segment 22 has a flaring angle "β" included between about 15% and about 30%.

The cross sections of the vent channel 17 can take any shape hut it is preferable for these sections to have polygonal shape with sharp corners.

In other words, each of segments 20, 21, 22 of the vent channel 17 is delimited by a plurality of preferably flat walls. Two adjacent walls of said plurality delimit a corner between each other that is preferably not radiused.

The vent channel 17 has a minimum section preferably included between about 0.002 mm² and about 0.01 mm²

In addition, the direction along which the vent channel 17 extends can be anyone, but preferably parallel to the longitudinal axis "X" of bush 14, depending on specific requirements.

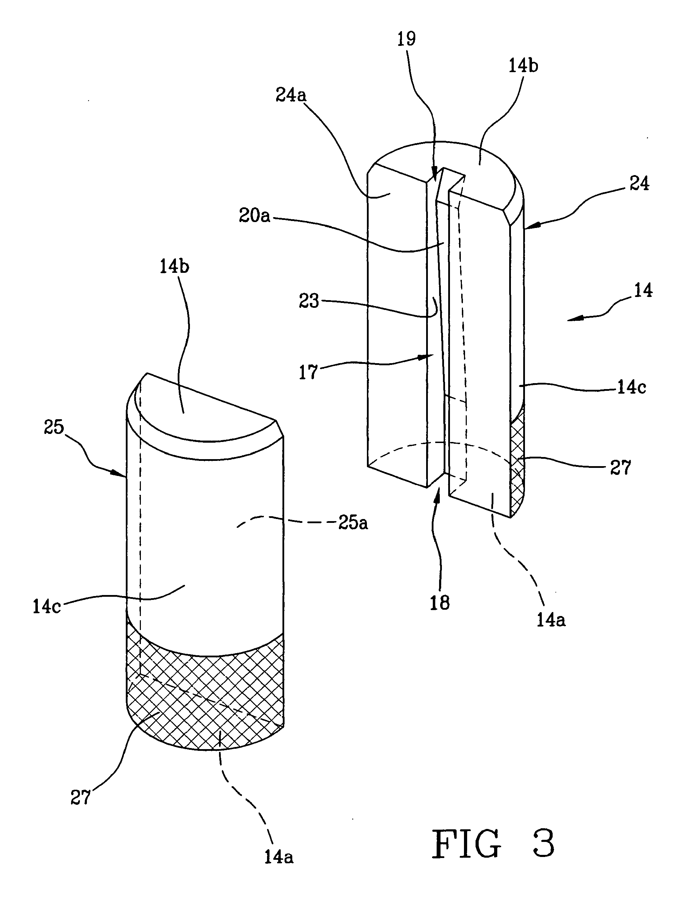

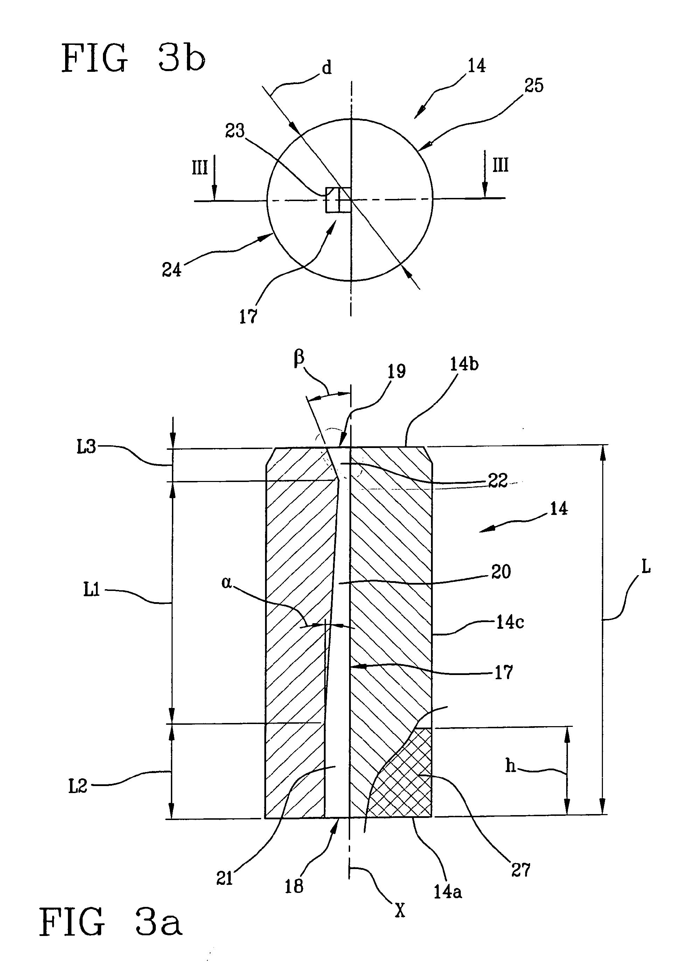

In accordance with a first embodiment (Figs. 3, 3a, 3b), the vent channel 17 extends into bush 14, and the walls delimiting it all belong to the bush 14 itself.

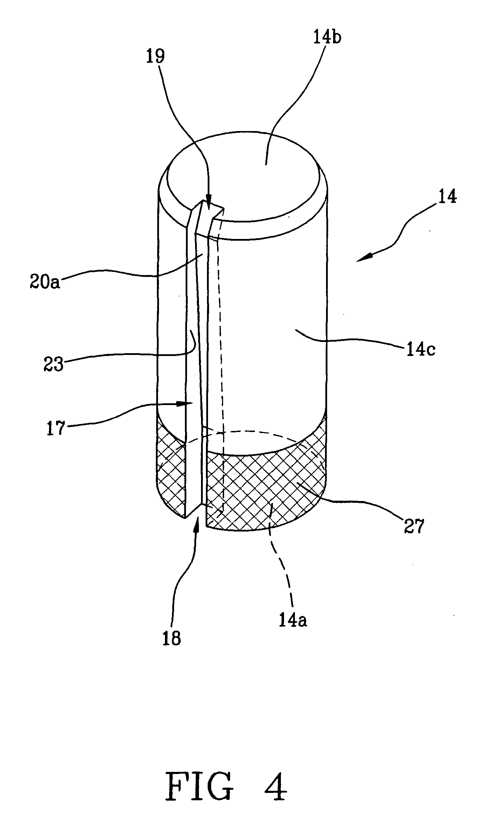

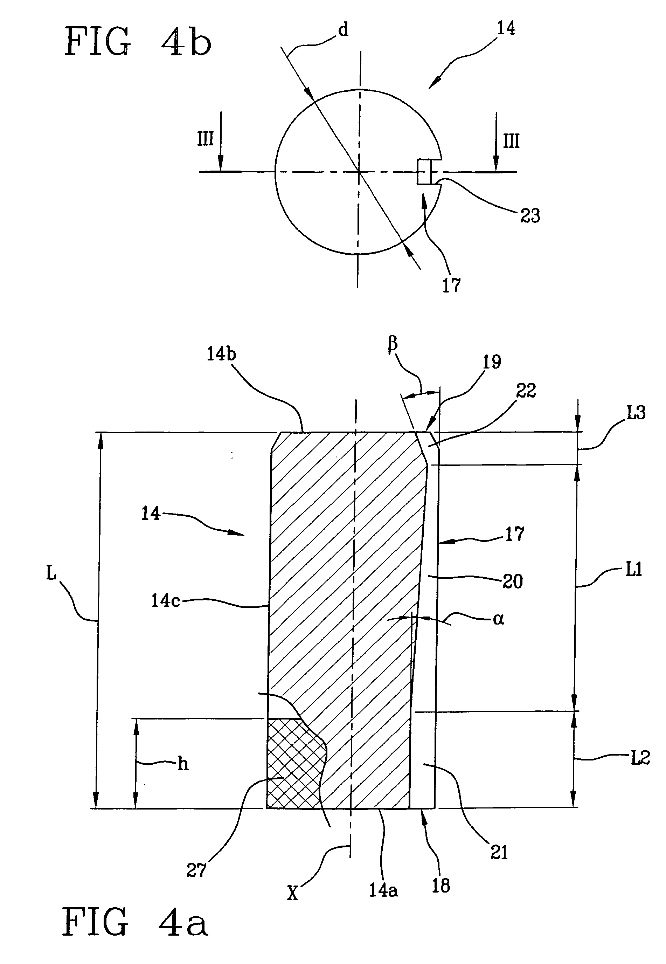

In accordance with a second embodiment (Figs. 4, 4a, 4b), the vent channel 17 is defined by a furrow 23 formed preferably by milling in the side wall 14c of bush 14. Channel 17 is fully defined only when bush 14 lies in the through hole 15 and therefore one of the walls delimiting channel 17 belongs to apparatus 1.

In the first embodiment shown in Figs. 3, 3a, 3b, the vent channel 17 extends into bush 14 and is substantially parallel to and adjacent the longitudinal axis "X" of the bush 14 itself.

The inlet segment 21, converging segment 20 and outlet segment 22 have rectangular sections. In more detail, the inlet segment 21 is delimited by four mutually parallel walls. The converging segment 20 is delimited by three mutually parallel walls and an inclined wall 20a. The outlet segment 22 is delimited by three mutually parallel walls and an inclined wall.

As shown in Fig. 3, bush 14 is divided into a first 24 and a second 25 part, preferably into two halves, along a substantially longitudinal plane, which identifies respective coupling surfaces 24a, 25a of said two parts 24, 25.

A furrow 23 is formed preferably by milling in the coupling surface 24a of the first part 24, so as to define two mutually parallel side walls perpendicular to the coupling surface, and a bottom wall. The bottom wall is such shaped as to define the inclined wall 20a of the converging segment 20, the inclined wall of the outlet segment 22 and one of the parallel walls of the inlet segment 21.

By moving the two parts 24, 25 close to each other at the coupling surfaces 24a, 25a, the vent channel 17 remains confined between the coupling surface 25a of the second part 25 and the furrow 23 formed in the first part 24. The inclined wall 20a of the converging segment 20 faces the coupling surface 25a of the second part 25 and is angled relative to the latter. The inclined wall of the outlet segment 22 too faces the coupling surface 25a of the second part 25 and is angled relative to the latter.

In the second embodiment shown in Figs. 4, 4a and 4b, furrow 23 extends on the side wall 14c, along a generatrix of the cylindrical bush 14.

Furrow 23 is delimited by two mutually parallel side walls and a bottom wall. The bottom wall is such shaped as to define the inclined wall 20a of the converging segment 20, the inclined wall of the outlet segment 22 and one of the parallel walls of the inlet segment 21.

By introducing bush 14 into hole 15, the vent channel 17 remains confined between a side wall 26 of hole 15 (Fig. 2) and furrow 23 formed in bush 14. The inclined wall 20a of the converging segment 20 faces the side wall 26 of hole 15 and is angled to said wall.

The inclined wall of the outlet segment 22 as well faces the side wall 26 of hole 15 and is angled to said wall.

In both embodiments described above, a distal portion of bush 14, close to the second end face 14b carrying the second end 19 of the vent channel 17 is bevelled to facilitate mounting of same in the through hole 15 of apparatus 1.

In particular, bevelling takes place on the circular corner along which the second end face 14b and said wall 14c of bush 14 meet.

In addition, preferably, the side surface 14c of bush 14 has a rough or uneven region 27, obtained by knurling and/or chamfering for example, which is adapted to interfere with the through hole 15 when bush 14 is mounted therein, so as to firmly clamp it.

In accordance with what illustrated above, the rough region 27 is preferably located at a proximal portion of bush 14, close to the first end face 14a. In addition, the rough region 27 extends over a height "h", measured parallel to the longitudinal axis "X" of bush 14, included between about 1 mm and about 2 mm.

Irrespective of the specific embodiment described above, during manufacture of apparatus 1, bushes 14 are mounted in the respective holes 15 in such a manner that they project from the surface of apparatus 1 into the moulding cavity 3 (as shown in Fig. 2a). Subsequently, the projecting portion 28 of each bush 14 is removed until it will be flush with the inner surface of apparatus 1 (Fig. 2), so that, during vulcanisation, the imprints of these bushes 14 are not impressed in the tyre 2 itself.

## Claims

1. An apparatus for vulcanisation and moulding of tyres comprising:
- containment walls (4a, 10) defining an inner surface (11) of a moulding cavity (3), the shape of said inner surface (11) matching the final conformation to be given to the vulcanised tyre (2), and
- a plurality of devices (13) for venting said moulding cavity (3),
wherein at least one of said venting devices (13) comprises an insert (14) firmly fitted in a through hole (15) in one of the containment walls (4a, 10) and having a vent channel (17) comprising a first end (18) opening into the moulding cavity (3) and a second end (19) in fluid communication with an environment external to the moulding cavity (3);
wherein the vent channel (17) has a tapered segment (20) between the first (18) and second (19) ends; said tapered segment (20) having a section reduction from the first end (18) to the second end (19) and counteracting flowing of the elastomeric material into said channel (17);
**characterized in that** no devices are placed inside the vent channel (17).

2. An apparatus as claimed in claim 1, wherein the tapered segment (20) has mutually converging smooth walls.

3. An apparatus as claimed in claim 1, wherein the vent channel (17) further has a lead-in or inlet segment (21) of constant section close to the first end (18), the tapered segment (20) extending from said inlet segment (21) towards the second end (19).

4. An apparatus as claimed in claim 1, wherein the vent channel (17) further has a flared outlet segment (22) located close to the second end (19), the tapered segment (20) extending from said outlet segment (22) towards the first end (18).

5. An apparatus as claimed in claim 1, wherein the vent channel (17) has polygonal cross sections.

6. An apparatus as claimed in claim 5, wherein each of the polygonal cross sections has sharp corners.

7. An apparatus as claimed in claim 1, wherein the vent channel (17) extends within the insert.

8. An apparatus as claimed in claim 1, wherein the vent channel (17) is defined by a furrow (23) extending in a side wall (14c) of the insert (14).

9. An apparatus as claimed in claim 1, wherein the insert (14) is divided into two parts (24, 25) along a substantially longitudinal plane of said insert (14).

10. An apparatus as claimed in claim 1, wherein a distal portion of the insert (14) carrying the second end (19) of the vent channel (17) is bevelled, to facilitate mounting of same in the through hole (15) of the apparatus (1).

11. An apparatus as claimed in claim 1, wherein a side surface (14c) of the insert (14) has a rough region (27) adapted to interfere with the through hole (15) to firmly clamp said insert (14) in said through hole (15).

12. An apparatus as claimed in claim 1, wherein the insert (14) has a length (L) greater than about 8 mm and smaller than about 12 mm.

13. An apparatus as claimed in claim 1, wherein the insert (14) has a diameter (d) greater than about 0.8 mm and smaller than about 3 mm.

14. An apparatus as claimed in claim 1, wherein the tapered segment (20) of the vent channel (17) has a length (L1) greater than about 4 mm and smaller than about 8 mm.

15. An apparatus as claimed in claim 1, wherein the inlet segment (21) of the vent channel (17) has a length (L2) greater than about 0.8 mm and smaller than about 1.5 mm.

16. An apparatus as claimed in claim 1, wherein the outlet segment (22) of the vent channel (17) has a length (L3) greater than about 3 mm and smaller than about 4 mm.

17. An apparatus as claimed in claim 1, wherein the tapered segment (20) of the vent channel (17) has a tapering angle (α) greater than about 2° and smaller than about 4°.

18. An apparatus as claimed in claim 1, wherein the outlet segment (22) of the vent channel (17) has a flaring angle (β) greater than about 15° and smaller than about 30°.

19. An apparatus as claimed in claim 1, wherein the vent channel (17) has an inlet section greater than about 0.05 mm² and smaller than about 1.5 mm².

20. An apparatus as claimed in claim 1, wherein the vent channel (17) has a minimum section greater than about 0.002 mm² and smaller than about 0,01 mm ²

21. A process for vulcanisation and moulding of tyres, comprising the steps of:
- providing an apparatus for vulcanisation and moulding of tyres comprising containment walls (4a, 10) defining an inner surface (11) of a moulding cavity (3), the shape of said inner surface (11) matching the final shape to be given to the vulcanised tyre;
- introducing a green tyre to be vulcanised into the moulding cavity (3);
- closing the moulding cavity (3), and pressing the green tyre against the containment walls (4a, 10), and supplying heat to the green tyre (2);
wherein the step of providing an apparatus comprises:
- making through holes (15) into the containment walls (4a, 10);
- providing inserts (14);
- forming a vent channel (17) that has no devices inside in each insert (14), which channel (17) has a tapered segment (20) between a first end (18) and a second end (19); said tapered segment (20) having a section reduction in the direction of the second end (19);
- introducing and clamping the inserts (14) into the respective through holes (15) so that the first end (18) of the vent channel (17) opens into the moulding cavity (3) and the second end (19) is in fluid communication with an environment external to the moulding cavity (3); wherein the tapered segment (20) counteracts flowing of the elastomeric material into the channel (17).

22. A process as claimed in claim 21, wherein the step of making the vent channel (17) comprises: dividing the insert (14) into two parts (24, 25) along a substantially longitudinal plane of said insert (14); forming the vent channel (17) by producing a furrow (23) in a coupling surface (24a, 25a) of at least one of the two parts (24, 25); moving the two parts (24, 25) close to each other at said coupling surface (24a, 25a).

23. A process as claimed in claim 21, wherein the step of making the vent channel (17) comprises: forming the vent channel (17) by producing a furrow (23) in a side surface (14c) of the insert (14).

24. A process as claimed in claim 21, further comprising the step of creating at least one rough region (27), which is adapted to interfere with the through hole (15), in the side surface (14c) of the insert (17), so as to firmly clamp said insert (14) in said through hole (15).

25. A process as claimed in claim 22 or 23, further comprising the step of, after fitting the insert (14) into the respective through hole (15), removing a portion (28) of said insert (14) projecting from the inner surface (11) of the moulding cavity (3) so as to make it flush with said inner surface (11).

## Patentansprüche

1. Vorrichtung zur Vulkanisierung und Formung von Reifen mit:
- Behälterwänden (4a, 10), die eine innere Oberfläche (11) eines Formungshohlraums (3) definieren, wobei die Gestalt der inneren Oberfläche (11) zur endgültigen Ausgestaltung passt, die dem vulkanisierten Reifen (2) gegeben werden soll, und
- mehreren Einrichtungen (13) zum Entlüften des Formungshohlraums (3),
wobei wenigstens eine der Entlüftungseinrichtungen (13) einen Einsatz (14) aufweist, der fest in ein Durchgangsloch (15) in einer der Behälterwände (4a, 10) eingepasst ist und einen Entlüftungskanal (17) mit einem ersten Ende (18), das zu dem Formungshohlraum (3) hin offen ist, und einem zweiten Ende (19) in Fluidverbindung mit einer Umgebung, die außerhalb des Formungshohlraums (3) ist, aufweist;
wobei der Entlüftungskanal (17) ein angefastes Segment (20) zwischen dem ersten (18) und dem zweiten (19) Ende aufweist, wobei das angefaste Segment (20) eine Querschnittsverringerung vom ersten Ende (18) zum zweiten Ende (19) aufweist und einem Fluss des Elastomermaterials in den Kanal (17) hinein entgegenwirkt;
**dadurch gekennzeichnet, dass** keine Einrichtungen innerhalb des Entlüftungskanals (17) angeordnet sind.

2. Vorrichtung nach Anspruch 1, bei der das angefaste Segment (20) zueinander zusammenlaufende glatte Wände aufweist.

3. Vorrichtung nach Anspruch 1, bei welcher der Entlüftungskanal (17) ferner ein Einführ- oder Einlasssegment (21) vom konstantem Querschnitt in der Nähe des ersten Endes (18) aufweist, wobei sich das angefaste Segment (20) von dem Einlasssegment (21) zu dem zweiten Ende (19) hin erstreckt.

4. Vorrichtung nach Anspruch 1, bei welcher der Entlüftungskanal (17) ferner ein aufgeweitetes Auslasssegment (22) aufweist, das nahe an dem zweiten Ende (19) angeordnet ist, wobei sich das angefaste Segment (20) von dem Auslasssegment (22) zu dem ersten Ende (18) hin erstreckt.

5. Vorrichtung nach Anspruch 1, bei welcher der Entlüftungskanal (17) vieleckige Querschnitte aufweist.

6. Vorrichtung nach Anspruch 5, bei der jeder der vieleckigen Querschnitte scharfe Ecken aufweist.

7. Vorrichtung nach Anspruch 1, bei der sich der Entlüftungskanal (17) innerhalb des Einsatzes erstreckt.

8. Vorrichtung nach Anspruch 1, bei welcher der Entlüftungskanal (17) durch eine Nut (23) definiert ist, die sich in einer Seitenwand (14c) des Einsatzes (14) erstreckt.

9. Vorrichtung nach Anspruch 1, bei welcher der Einsatz (14) in zwei Teile (24, 25) entlang einer im Wesentlichen längs verlaufenden Ebene des Einsatzes (14) aufgeteilt ist.

10. Vorrichtung nach Anspruch 1, bei der ein distaler Abschnitt des Einsatzes (14), der das zweite Ende (19) des Entlüftungskanals (17) trägt, angeschrägt ist, um ein Befestigen von diesem in dem Durchgangsloch (15) der Vorrichtung (1) zu erleichtern.

11. Vorrichtung nach Anspruch 1, bei der eine Seitenoberfläche (14c) des Einsatzes (14) einen rauen Bereich (27) aufweist, der dafür angepasst ist, mit dem Durchgangsloch (15) zusammenzuwirken, um den Einsatz (14) in dem Durchgangsloch (15) fest einzuklemmen.

12. Vorrichtung nach Anspruch 1, bei welcher der Einsatz (14) eine Länge (L) größer als ungefähr 8 mm und kleiner als ungefähr 12 mm aufweist.

13. Vorrichtung nach Anspruch 1, bei welcher der Einsatz (14) einen Durchmesser (d) größer als ungefähr 0,8 mm und kleiner als ungefähr 3 mm aufweist.

14. Vorrichtung nach Anspruch 1, bei der das angefaste Segment (20) des Entlüftungskanals (17) eine Länge (L1) größer als ungefähr 4 mm und kleiner als ungefähr 8 mm aufweist.

15. Vorrichtung nach Anspruch 1, bei der das Einlasssegment (21) des Entlüftungskanals (17) eine Länge (L2) größer als ungefähr 0,8 mm und kleiner als ungefähr 1,5 mm aufweist.

16. Vorrichtung nach Anspruch 1, bei der das Auslasssegment (22) des Entlüftungskanals (17) eine Länge (L3) größer als ungefähr 3 mm und kleiner als ungefähr 4 mm aufweist.

17. Vorrichtung nach Anspruch 1, bei der das angefaste Segment (20) des Entlüftungskanals (17) einen Anfaswinkel (α) größer als ungefähr 2° und kleiner als ungefähr 4° aufweist.

18. Vorrichtung nach Anspruch 1, bei der das Auslasssegment (22) des Entlüftungskanals (17) einen Aufweitungswinkel (β) größer als ungefähr 15° und kleiner als ungefähr 30° aufweist.

19. Vorrichtung nach Anspruch 1, bei welcher der Entlüftungskanal (17) einen Einlassquerschnitt größer als ungefähr 0,05 mm² und kleiner als ungefähr 1,5 mm² aufweist.

20. Vorrichtung nach Anspruch 1, bei welcher der Entlüftungskanal (17) einen minimalen Querschnitt größer als ungefähr 0,002 mm² und kleiner als ungefähr 0,01 mm² aufweist.

21. Verfahren zum Vulkanisieren und Formen von Reifen mit folgenden Schritten:
- Bereitstellen einer Vorrichtung zum Vulkanisieren und Formen von Reifen, die Behälterwände (4a, 10) aufweist, die eine innere Oberfläche (11) eines Formungshohlraums (3) definieren, wobei die Gestalt der inneren Oberfläche (11) zur endgültigen Gestalt passt, die dem vulkanisierten Reifen gegeben werden soll;
- Einführen eines unbearbeiteten Reifens, der vulkanisiert werden soll, in den Formungshohlraum (3);
- Schließen des Formungshohlraums (3) und Drücken des unbearbeiteten Reifens gegen die Behälterwände (4a, 10) und Zuführen von Hitze zu dem unbearbeiteten Reifen (2);
wobei der Schritt des Bereitstellens einer Vorrichtung aufweist:
- Ausbilden von Durchgangslöchern (15) in den Behälterwänden (4a, 10);
- Bereitstellen von Einsätzen (14);
- Ausbilden eines Entlüftungskanals (17), der im Inneren keine Einrichtungen aufweist, in jedem Einsatz (14), wobei der Kanal (17) ein angefastes Segment (20) zwischen einem ersten Ende (18) und einem zweiten Ende (19) aufweist, wobei das angefaste Segment (20) eine Querschnittsverringerung in der Richtung zu dem zweiten Ende (19) hin aufweist;
- Einführen und Einklemmen der Einsätze (14) in jeweiligen Durchgangslöchern (15), so dass sich das erste Ende (18) des Entlüftungskanals (17) zu dem Formungshohlraum (3) öffnet und so dass das zweite Ende (19) in einer Fluidverbindung mit einer Umgebung ist, die außerhalb des Formungshohlraums (3) ist, wobei das angefaste Segment (20) einem Fluss des Elastomermaterials in den Kanal (17) hinein entgegenwirkt.

22. Verfahren nach Anspruch 21, bei dem der Schritt des Herstellens des Entlüftungskanals (17) aufweist: Teilen des Einsatzes (14) in zwei Teile (24, 25) entlang einer im Wesentlichen längs verlaufenden Ebene des Einsatzes (14); Ausbilden des Entlüftungskanals (17) durch Herstellen einer Nut (23) in einer Kopplungsoberfläche (24a, 25a) von wenigstens einem der zwei Teile (24, 25); Bewegen der zwei Teile (24, 25) nahe zueinander bei der Kopplungsoberfläche (24a, 25a).

23. Verfahren nach Anspruch 21, bei dem der Schritt des Herstellens des Entlüftungskanals (17) aufweist:
Ausbilden des Entlüftungskanals (17) durch Herstellen einer Nut (23) in einer Seitenoberfläche (14c) des Einsatzes (14).

24. Verfahren nach Anspruch 21, ferner mit dem Schritt des Schaffens wenigstens eines rauen Bereichs (27) in der Seitenoberfläche (14c) des Einsatzes (17), der dafür angepasst ist, mit dem Durchgangsloch (15) zusammenzuwirken, um den Einsatz (14) fest in dem Durchgangsloch (15) einzuklemmen.

25. Verfahren nach Anspruch 22 oder 23, ferner, nachdem der Einsatz (14) in das jeweilige Durchgangsloch (15) eingepasst wurde, mit dem Schritt des Entfernens eines Abschnitts (28) des Einsatzes (14), der von der inneren Oberfläche (11) des Formungshohlraums (3) hervorragt, um diesen bündig mit der inneren Oberfläche (11) zu machen.

## Revendications

1. Appareil pour la vulcanisation et le moulage de pneus comportant :
- des parois de confinement (4a, 10) définissant une surface intérieure (11) d'une cavité de moulage (3), la forme de la surface intérieure (11) correspondant à la conformation finale à donner au pneu vulcanisé (2), et
- plusieurs dispositifs (13) pour dégazer la cavité de moulage (3),
dans lequel au moins un des dispositifs de dégazage (13) comporte un insert (14) solidement emboîté dans un trou traversant (15) dans l'une des parois de confinement (4a, 10) et ayant un canal de dégazage (17) comportant une première extrémité (18) débouchant dans la cavité de moulage (3) et une deuxième extrémité (19) en communication fluide avec un environnement externe de la cavité de moulage (3) ;
dans lequel le canal de dégazage (17) a un segment effilé (20) entre les première (18) et deuxième (19) extrémités ; le segment effilé (20) ayant une réduction de la section depuis la première extrémité (18) jusqu'à la deuxième extrémité (19) et contrecarrant le flux de matériau élastomère dans ledit canal (17) ;
**caractérisé en ce qu'**il n'y a pas de dispositif placé dans le canal de dégazage (17).

2. Appareil selon la revendication 1, dans lequel le segment effilé (20) a des parois lisses convergeant mutuellement.

3. Appareil selon la revendication 1, dans lequel le canal de dégazage (17) a en outre un segment d'introduction ou d'entrée (21) de section constante proche de la première extrémité (18), le segment effilé (20) s'étendant depuis le segment d'entrée (21) vers la deuxième extrémité (19).

4. Appareil selon la revendication 1, dans lequel le canal de dégazage (17) a en outre un segment de sortie évasé (22) situé proche de la deuxième extrémité (19), le segment effilé (20) s'étendant depuis le segment de sortie (22) vers la première extrémité (18).

5. Appareil selon la revendication 1, dans lequel le canal de dégazage (17) a des sections transversales polygonales.

6. Appareil selon la revendication 5, dans lequel chacune des sections transversales polygonales a des angles vifs.

7. Appareil selon la revendication 1, dans lequel le canal de dégazage (17) s'étend à l'intérieur de l'insert.

8. Appareil selon la revendication 1, dans lequel le canal de dégazage (17) est défini par un sillon (23) s'étendant dans une paroi latérale (14c) de l'insert (14).

9. Appareil selon la revendication 1, dans lequel l'insert (14) est divisé en deux parties (24, 25) selon un plan sensiblement longitudinal de l'insert (14).

10. Appareil selon la revendication 1, dans lequel une partie distale de l'insert (14) portant la deuxième extrémité (19) du canal de dégazage (17) est biseautée, pour faciliter le montage de l'insert dans le trou (15) de l'appareil (1).

11. Appareil selon la revendication 1, dans lequel une surface latérale (14c) de l'insert (14) a une région rugueuse (27) adaptée pour interférer avec le trou traversant (15) pour serrer solidement l'insert (14) dans le trou traversant (15).

12. Appareil selon la revendication 1, dans lequel l'insert (14) a une longueur (L) supérieure à environ 8 mm et inférieure à environ 12 mm.

13. Appareil selon la revendication 1, dans lequel l'insert (14) a un diamètre (d) supérieur à environ 0,8 mm et inférieur à environ 3 mm.

14. Appareil selon la revendication 1, dans lequel le segment effilé (20) du canal de dégazage (17) a une longueur (L1) supérieure à environ 4 mm et inférieure à environ 8 mm.

15. Appareil selon la revendication 1, dans lequel le segment d'entrée (21) du canal de dégazage (17) a une longueur (L2) supérieure à environ 0,8 mm et inférieure à environ 1,5 mm.

16. Appareil selon la revendication 1, dans lequel le segment de sortie (22) du canal de dégazage (17) a une longueur (L3) supérieure à environ 3 mm et inférieure à environ 4 mm.

17. Appareil selon la revendication 1, dans lequel le segment effilé (20) du canal de dégazage (17) a un angle d'effilement (α) supérieur à environ 2° et inférieur à environ 4°.

18. Appareil selon la revendication 1, dans lequel le segment de sortie (22) du canal de dégazage (17) a un angle d'évasement (β) supérieur à environ 15° et inférieur à environ 30°.

19. Appareil selon la revendication 1, dans lequel le canal de dégazage (17) a une section d'entrée supérieure à environ 0,05 mm² et inférieure à environ 1,5 mm².

20. Appareil selon la revendication 1, dans lequel le canal de dégazage (17) a une section minimale supérieure à environ 0,002 mm² et inférieure à environ 0,01 mm².

21. Procédé pour la vulcanisation et le moulage de pneus, comportant les étapes de :
- procurer un appareil pour la vulcanisation et le moulage de pneus comportant des parois de confinement (4a, 10) définissant une surface intérieure (11) d'une cavité de moulage (3), la forme de la surface intérieure (11) correspondant à la conformation finale à donner au pneu vulcanisé ;
- introduire un pneu cru à vulcaniser dans la cavité de moulage (3) ;
- fermer la cavité de moulage (3), et presser le pneu cru contre les parois de confinement (4a, 10), et procurer de la chaleur au pneu cru (2) ;
dans lequel l'étape de procurer appareil comporte :
- faire des trous traversants (15) dans les parois de confinement (4a, 10) ;
- procurer des inserts (14) ;
- former dans chaque insert (14) un canal de dégazage (17), qui n'a pas de dispositif placé à l'intérieur, lequel canal (17) a un segment effilé (20) entre une première extrémité (18) et une deuxième extrémité (19) ; le segment effilé (20) ayant une réduction de section dans la direction de la deuxième extrémité (19) ;
- introduire et serrer les inserts (14) dans les trous traversants (15) respectifs de sorte que la première extrémité (18) du canal de dégazage (17) débouche dans la cavité de moulage (3) et la deuxième extrémité (19) est en communication fluide avec un environnement externe à la cavité de moulage (3) ; le segment effilé (20) contrecarrant le flux de matériau élastomère dans ledit canal (17).

22. Procédé selon la revendication 21, dans lequel l'étape de fabriquer le canal de dégazage (17) comporte : diviser l'insert (14) en deux parties (24, 25) selon un plan sensiblement longitudinal de l'insert (14) ; former le canal de dégazage (17) en produisant un sillon (23) dans une surface d'accouplement (24a, 25a) d'au moins une des deux parties (24, 25) ; rapprocher les deux parties (24, 25) l'une de l'autre au niveau de la surface de couplage (24a, 25a).

23. Procédé selon la revendication 21, dans lequel l'étape de fabriquer le canal de dégazage (17) comporte : former le canal de dégazage (17) en produisant un sillon (23) dans une surface latérale (14c) de l'insert (14).

24. Procédé selon la revendication 21, comportant en outre l'étape de créer, dans la surface latérale (14c) de l'insert (17), au moins une région rugueuse (27) qui est adaptée pour interférer avec le trou traversant (15), afin de serrer solidement l'insert (14) dans le trou traversant (15).

25. Procédé selon la revendication 22 ou 23, comportant en outre l'étape, après emboîtement de l'insert (14) dans le trou traversant (15) respectif, de supprimer une partie (28) de l'insert (14) dépassant de la surface intérieure (11) de la cavité de moulage (3) afin de le rendre affleurant avec la surface intérieure (11).
